# EUROPÄISCHE PATENTSCHRIFT

(11) **EP 4 580 917 B1**
(45) Veröffentlichungstag und Bekanntmachung des Hinweises auf die Patenterteilung: **16.09.2026**
(21) Anmeldenummer: 24800784.1
(22) Anmeldetag: 22.10.2024
(51) Int. Cl.: B60S 1/52, B60S 1/56, B05B 1/02

(54) **DÜSE ZUR AUTOMATISCHEN REINIGUNG EINES SENSORS**
NOZZLE FOR AUTOMATICALLY CLEANING A SENSOR
BUSE DE NETTOYAGE AUTOMATIQUE D'UN CAPTEUR

(30) Priorität: 07.11.2023 DE 102023130809
(43) Veröffentlichungstag der Anmeldung: 09.07.2025
(73) Patentinhaber: A. RAYMOND ET CIE, 38000 Grenoble (FR)
(72) Erfinder: REGENSBURGER, Jan, 79400 Kandern (DE); GRATHWOL, Thomas, 79418 Schliengen (DE)
(74) Vertreter: Hoffmann Eitle
(86) Internationale Anmeldenummer: PCT/EP2024/079860
(87) Internationale Veröffentlichungsnummer: WO 2025/098767

(56) Entgegenhaltungen:
- WO-A1-2023/187683
- US-A- 4 811 903
- US-A1- 2021 088 668

## Beschreibung

### GEBIET DER ERFINDUNG

Die Erfindung betrifft eine Düse zur automatischen Reinigung eines Sensors, insbesondere eines Sensors eines Kraftfahrzeugs.

### STAND DER TECHNIK

Eine Düse zur automatischen Reinigung eines Sensors, insbesondere eines Sensors eines Kraftfahrzeugs findet sich regelmäßig in Fahrzeugen. Mit der Düse wird ein Sensor gereinigt. Alternativ kann mit der Düse auch ein Scheinwerfer gereinigt werden.

Der Sensor gewinnt als Unterstützung für den Fahrer, für das teilautonome Fahren oder für das autonome Fahren zunehmend an Bedeutung. Der Sensor kann beispielsweise ein Radarsensor, ein Lidar(Light detection and ranging)-Sensor oder ein Ultraschallsensor sein. Mittels des Sensors kann beispielsweise ein Kraftfahrzeug Informationen über die Umgebung sammeln und basierend darauf den Fahrer unterstützen oder autonom agieren. Zum Beispiel wird ein Sensor für das autonome Fahren, für einen Abstandsregeltempomat, zur Unterstützung beim Parken oder das automatische Einparken genutzt.

Während der Nutzung des Sensors, beispielsweise während der Fahrt des Kraftfahrzeugs sammelt sich jedoch Schmutz auf dem Sensor. Der Schmutz beeinträchtigt die Funktion des Sensors, sodass beispielweise keine Abstandmessungen für das teilautonome Fahren, das autonome Fahren oder das automatische Einparken gesammelt werden können. Somit kann das Fahrzeug aufgrund des Schmutzes auf dem Sensor den Fahrer nicht mehr unterstützen und nicht mehr autonom agieren.

Daher muss der Schmutz regelmäßig und möglichst vollständig von dem Sensor entfernt werden. Hierzu wird eine Düse eingesetzt. Mittels der Düse wird ein Fluid auf den Sensor aufgetragen. Auf diese Weise kann der Schmutz aufgeweicht werden und mit dem Fluid fortgespült werden. Hierbei werden jedoch große Fluidmengen wie beispielsweise Wasser benötigt.

Zudem kann hartnäckiger Schmutz beispielsweise durch Insekten auf dem Sensor nicht aufgeweicht werden und mit dem Fluid fortgespült werden. Somit muss der hartnäckige Schmutz vom Fahrer des Fahrzeugs händisch entfernt werden. Hierzu muss das Fahrzeug zunächst zu einer Reinigungsstelle wie einer Tankstelle gefahren werden, um die Reinigung durchzuführen. Zum einen ist dies sehr zeitaufwendig. Zum anderen kann der Fahrer sich für die Fahrt zu der Reinigungsstelle nicht mehr auf den Sensor verlassen, wenn der Sensor bereits verschmutzt ist.

Basierend auf diesem Stand der Technik ist es die Aufgabe der vorliegenden Erfindung eine Düse bereitzustellen, mit der Schmutz und insbesondere hartnäckiger Schmutz zuverlässig, einfach und gründlich entfernt werden kann, während die Düse einen geringen Fluidverbrauch aufweist und so sehr effizient ist. US-A1-2021/0088668 offenbart eine ähnliche Düse.

### ZUSAMMENFASSUNG DER ERFINDUNG

Die oben genannte Aufgabe wird gemäß einem ersten Aspekt der Erfindung mit einer Düse zur automatischen Reinigung eines Sensors, insbesondere eines Sensors eines Kraftfahrzeugs, gelöst, wobei die Düse einen Auslass zur Abgabe des Fluids umfasst, wobei die Düse eine ebene Fläche umfasst, wobei die ebene Fläche auf der innenliegenden Oberfläche der Düse angeordnet ist, wobei der Auslass in der ebenen Fläche angeordnet ist, wobei die ebene Fläche zwei gegenüberliegende Seiten umfasst, wobei die ebene Fläche eine obere Seite umfasst, wobei die obere Seite zwischen den zwei gegenüberliegenden Seiten angeordnet ist, wobei die Düse auf der innenliegenden Oberfläche zwei gebogene Flächen umfasst, wobei jeweils eine der gebogenen Flächen an jeweils einer der zwei gegenüberliegenden Seiten der ebenen Fläche angeordnet ist, wobei die gebogenen Flächen in die Richtung der oberen Seite aufeinander zulaufend ausgebildet sind.

Auf diese Weise kann die Düse besonders einfach und zuverlässig Schmutz, insbesondere auf einem Sensor entfernen. Dabei kann mit der Düse auch hartnäckiger Schmutz problemlos gelöst werden, sodass eine einfache, zuverlässige und gründliche Entfernung von Schmutz gewährleistet werden kann. Vor allem ist die Düse besonders effizient aufgrund eines geringeren Fluidverbrauchs.

Die Düse kann zur Beschleunigung des Fluids ausgebildet sein. Die Düse kann zum Versprühen des Fluids ausgebildet sein. Die Düse kann einen Einlass zur Aufnahme des Fluids umfassen. Die Düse kann insbesondere zur Bildung von mindestens drei Fluidstrahlen ausgebildet sein. Ein Fluidstrahl kann eine größere Fluidmenge aufweisen als die Bereiche zwischen den mindestens drei Fluidstrahlen. Auf diese Weise kann eine besonders einfache, zuverlässige und gründliche Entfernung von Schmutz gewährleistet werden.

Das Fluid kann eine Flüssigkeit und/oder ein Gas sein. Das Fluid kann beispielsweise Luft, Wasser, Wasser mit einem Reinigungsmittel und/oder Wasser mit einem Frostschutzmittel sein.

Zur automatischen Reinigung eines Sensors kann bedeuten, dass die Reinigung des Sensors ohne ein Eingreifen einer Person erfolgt. Somit kann die Düse den Sensor selbstständig reinigen. Die Reinigung des Sensors kann durch den Sensor selbst und/oder durch eine Person, wie beispielsweise den Fahrer eines Kraftfahrzeugs, ausgelöst werden.

Der Sensor kann beispielsweise ein Radarsensor, ein Lidar(Light detection and ranging)-Sensor, eine Kamera oder ein Ultraschallsensor sein.

Der Auslass zur Abgabe des Fluids kann eine Verbindung zwischen dem Innenraum der Düse und der Umgebung der Düse sein. Der Auslass kann derartig ausgestaltet sein, dass ausreichend Fluid durch den Auslass hinaustreten kann. Der Auslass kann eine Öffnung in der Düse sein. Der Auslass kann beispielsweise radial zur Längsachse versetzt oder entlang der Längsachse angeordnet sein.

Die ebene Fläche kann eine Ebene bilden. Die ebene Fläche kann eine durch zwei Achsen beschriebene Fläche sein. Die ebene Fläche kann insbesondere keine Krümmung aufweisen. Die ebene Fläche kann eine zweidimensionale Erstreckung auf der innenliegenden Oberfläche der Düse aufweisen.

Die ebene Fläche ist auf der innenliegenden Oberfläche der Düse angeordnet. Die innenliegende Oberfläche der Düse kann die Oberfläche sein, die ein Fluid begrenzen kann. Die innenliegende Oberfläche kann ein Fluid leiten. Die innenliegende Oberfläche kann einen geschlossenen Raum zur Führung eines Fluids in der Düse bilden. Die ebene Fläche kann radial zu einer Mittelachse der Düse angeordnet sein. Die ebene Fläche kann insbesondere parallel zur Mittelachse verlaufen.

Der Auslass ist in der ebenen Fläche angeordnet kann bedeuten, dass der Auslass eine Unterbrechung in der ebenen Fläche sein kann, die sich von der innenliegenden Oberfläche und zu der außenliegenden Oberfläche der Düse erstrecken kann. Der Auslass kann teilweise oder vollständig von der ebenen Fläche umgeben sein.

Die ebene Fläche umfasst zwei gegenüberliegende Seiten. Die Seiten der Fläche können die Begrenzung der ebenen Fläche sein. Die gegenüberliegenden Seiten können eine Linie sein. Die zwei gegenüberliegenden Seiten können die ebene Fläche entlang einer Geraden zwischen den zwei gegenüberliegenden Seiten begrenzen. Die gegenüberliegenden Seiten können die ebene Fläche zumindest teilweise begrenzen. Die zwei gegenüberliegenden Seiten können insbesondere parallel zueinander ausgerichtet sein. Die zwei gegenüberliegenden Seiten können einen Winkel größer als 0° miteinander bilden. Die zwei gegenüberliegenden Seiten können spiegelsymmetrisch zu einer Ebene sein, wobei die Ebene durch die ebene Fläche verläuft, wobei insbesondere die Ebene senkrecht zur ebenen Fläche verläuft. Die zwei gegenüberliegenden Seiten können aus mehreren Geraden bestehen. Alternativ oder zusätzlich, können die zwei gegenüberliegenden Seiten eine Krümmung aufweisen.

Die ebene Fläche umfasst eine obere Seite. Die obere Seite kann entlang einer Flussrichtung eines Fluids in der Düse hinter einer unteren Seite der ebenen Fläche angeordnet sein. Die obere Seite kann auf derselben Höhe liegen wir die untere Seite. Die obere Seite kann insbesondere die Seite sein, die näher an der Seite des Auslasses angeordnet sein kann, an der ein Fluid umgelenkt werden kann. Die obere Seite kann entlang der Fluidrichtung an der Außenseite des umgelenkten Fluids liegen. Die obere Seite kann die Seite sein, von der das Fluid weggelenkt werden kann. Die obere Seite kann aus mehreren Geraden bestehen. Alternativ oder zusätzlich, kann die obere Seite eine Krümmung aufweisen
Die obere Seite ist zwischen den zwei gegenüberliegenden Seiten angeordnet. Die obere Seite kann die zwei gegenüberliegenden Seiten miteinander verbinden. Die obere Seite kann beabstandet zu den zwei gegenüberliegenden Seiten angeordnet sein, sodass die obere Seite die zwei gegenüberliegenden Seiten nicht berühren kann. Die obere Seite kann insbesondere zwischen zwei Enden der zwei gegenüberliegenden Seiten angeordnet sein.

Die Düse umfasst auf der innenliegenden Oberfläche zwei gebogenen Flächen. Die zwei gebogenen Flächen können jeweils eine Krümmung aufweisen. Die zwei gebogenen Flächen können einen Teil der innenliegenden Oberfläche bilden. Die zwei gebogenen Flächen können eine Verjüngung des Innenraums der Düse bewirken. Insbesondere können die zwei gebogenen Flächen derart ausgebildet sein, dass die zwei gebogenen Flächen den statischen Druck auf ein Fluid durch eine Verringerung des Raums erhöhen. Die zwei gebogenen Flächen können insbesondere dieselbe Krümmung und/oder denselben Verlauf aufweisen.

Jeweils eine der gebogenen Flächen ist an jeweils einer der zwei gegenüberliegenden Seiten der ebenen Fläche angeordnet. So kann beispielsweise jeweils eine gebogene Fläche mit einer der zwei gegenüberliegenden Seiten der ebenen Fläche verbunden sein. Die gebogenen Flächen können an der ebenen Fläche angeordnet sein, wobei die gebogenen Flächen an den zwei gegenüberliegenden Seiten mit der ebenen Fläche verbunden sein können.

Die gebogenen Flächen sind in die Richtung der oberen Seite aufeinander zulaufend ausgebildet. Die gebogenen Flächen können beispielsweise eine Verjüngung des Innenraums der Düse in die Richtung der oberen Seite bewirken. Zum Beispiel kann der Abstand zwischen den zwei gebogenen Flächen in Richtung der oberen Seite geringer werden. Insbesondere können die zwei gebogenen Flächen auch über die obere Seite hinaus aufeinander zulaufend ausgebildet sein. Somit kann beispielsweise der Abstand zwischen den zwei gebogenen Flächen in Richtung der oberen Seite geringer werden, wobei der Abstand zwischen den zwei gebogenen Flächen über die obere Seite hinaus noch geringer werden kann.

Gemäß einer ersten Ausführungsform können die zwei gebogenen Flächen über eine Mittelebene verbunden sein, wobei die Mittelebene an der oberen Seite angeordnet sein kann.

Durch die Mittelebene kann das Strömungsprofil des Fluids besonders vorteilhaft beeinflusst werden. Somit kann die Düse die Entfernung von Schmutz und insbesondere hartnäckigem Schmutz besonders zuverlässig, einfach, effizient und gründlich gewährleisten.

Die Mittelebene kann eine Krümmung aufweisen. Die Mittelebene kann eine durch zwei Achsen beschriebene Fläche sein. Die Mittelebene kann insbesondere keine Krümmung aufweisen. Die Mittelebene kann eine zweidimensionale Erstreckung auf der innenliegenden Oberfläche der Düse aufweisen.

Die beiden gebogenen Flächen können über die Mittelebene verbunden sein. Die Mittelebene kann somit zwischen den beiden gebogenen Flächen angeordnet sein und mit jeder der zwei gebogenen Flächen verbunden sein. Die Mittelebene kann in ihrer Breite variieren. Die Breite kann insbesondere die Erstreckung der Mittelebene zwischen den beiden gebogenen Flächen sein. Zum Beispiel kann die Breite der Mittelebene von der oberen Seite fortlaufend geringer werden, wobei die zwei gebogenen Flächen von der oberen Seite fortlaufend aufeinander zulaufen können.

Die Mittelebene kann an der oberen Seite angeordnet sein. Die Mittelebene kann somit an der ebenen Fläche angeordnet sein, wobei die Mittelebene insbesondere mit der ebenen Fläche an der oberen Seite verbunden sein kann. Die Mittelebene kann durch die zwei gebogenen Flächen und die ebene Fläche zumindest teilweise begrenzt werden.

Gemäß einer Ausführungsform kann die Mittelebene aus mindestens zwei Teilebenen bestehen.

Wenn die Mittelebene aus mindestens zwei Teilebenen bestehen kann, kann die Austrittsgeschwindigkeit eines Fluids vorteilhaft gesteuert werden. Hierdurch kann mit der Düse Schmutz und insbesondere hartnäckiger Schmutz besonders zuverlässig, einfach, effizient und gründlich entfernt werden.

Die Mittelebene kann aus mindestens zwei Teilebenen bestehen. Die mindestens zwei Teilebenen können direkt nebeneinander angeordnet sein. Beispielsweise können die mindestens zwei Teilebenen von der oberen Seite fortlaufend hintereinander angeordnet sein. Insbesondere kann jede der mindestens zwei Teilebenen mit den zwei gebogenen Flächen verbunden sein. Die mindestens zwei Teileebenen können unterschiedliche Größen aufweisen.

Gemäß einer Ausführungsform können die gebogenen Flächen an der ebenen Fläche in dem Bereich beginnen, in dem der Auslass in der ebenen Fläche angeordnet sein kann.

Auf diese Weise kann der Druck auf das Fluid über die gesamte Höhe des Auslasses beeinflusst und beispielsweise erhöht werden. Dadurch kann die Strömungsgeschwindigkeit des Fluids vorteilhaft beeinflusst werden, sodass mit der Düse Schmutz und insbesondere hartnäckiger Schmutz besonders zuverlässig, einfach, effizient und gründlich entfernt werden kann.

Die gebogenen Flächen können an der ebenen Fläche in dem Bereich beginnen, in dem der Auslass in der ebenen Fläche angeordnet sein kann, kann bedeuten, dass eine gedachte Linie zwischen den zwei gebogenen Flächen durch den Auslass verläuft. Beispielsweise können die zwei Enden der zwei gebogenen Flächen durch eine gedachte Linie verbunden werden, wobei die gedachte Linie durch den Auslass verläuft.

Gemäß einer Ausführungsform kann der Auslass rechteckig, oval oder halbmondförmig sein.

Auf diese Weise kann das Profil des ausströmenden Fluids vorteilhaft ausgestaltet sein, sodass Schmutz und insbesondere hartnäckiger Schmutz besonders zuverlässig, einfach, effizient und gründlich entfernt werden kann.

Halbmondförmig kann halbkreisförmig und/oder die Form einer Mondsichel sein.

Gemäß einer Ausführungsform kann jeweils ein Punkt jeder der beiden gebogenen Flächen maximal 0,5 mm, bevorzugt maximal 0,1 mm und besonders bevorzugt maximal 0,05 mm von dem Auslass beabstandet sein.

Auf diese Weise kann das Strömungsprofil des ausströmenden Fluids durch die gebogenen Flächen am Auslass besonders vorteilhaft beeinflusst werden, sodass Schmutz und insbesondere hartnäckiger Schmutz besonders zuverlässig, einfach, effizient und gründlich entfernt werden kann.

Jeweils ein Punkt jeder der beiden gebogenen Flächen kann maximal 0,5 mm, bevorzugt maximal 0,1 mm und besonders bevorzugt maximal 0,05 mm von dem Auslass beabstandet sein. Der Punkt jeder der beiden gebogenen Flächen kann eine beliebige Stelle auf jeder der gebogenen Flächen sein. Der Punkt kann die Stelle der gebogenen Flächen sein, der am nächsten an dem Auslass angeordnet ist. Der Punkt jeder der beiden gebogenen Flächen kann nur durch die ebene Fläche von dem Auslass maximal 0,5 mm, bevorzugt maximal 0,1 mm und besonders bevorzugt maximal 0,05 beabstandet sein.

Gemäß einer Ausführungsform kann sich die Düse entlang einer Mittelachse erstrecken, wobei die beiden gebogenen Flächen spiegelsymmetrisch zu einer Spiegelebene angeordnet sein können, wobei die Spiegelebene die Mittelachse enthalten kann und die Spiegelebene durch den Auslass, insbesondere durch den Mittelpunkt des Auslasses, verlaufen kann.

Auf diese Weise kann der durch die Düse erzeugte Strahl von dem ausströmenden Fluid besonders gleichmäßig sein, sodass die Reinigung von Sensoren besonders effizient, gründlich, zuverlässig und einfach sein kann. Wenn die Spiegelebene durch den Mittelpunkt des Auslasses verlaufen kann, ist die Reinigung besonders effizient.

Die Mittelachse kann die Längsachse der Düse sein. Die Mittelachse kann mittig durch die Düse verlaufen.

Der Mittelpunkt des Auslasses kann der Punkt mit dem maximalen Abstand zu allen Rändern des Auslasses sein
Gemäß einer Ausführungsform kann die Düse an der außenliegenden Oberfläche einen Vorsprung umfassen, wobei der Vorsprung an dem der oberen Seite zugewandten Bereich des Auslasses angeordnet sein kann.

Auf diese Weise kann mindestens ein besonders harter Sprühstahl mit der Düse erzeugt werden. Hierdurch kann die Reinigung des Sensors besonders effizient, gründlich, zuverlässig und einfach sein.

Die außenliegende Oberfläche der Düse kann die Außenseite der Düse sein. Die außenliegende Oberfläche kann mit der innenliegenden Oberfläche der Düse die Materialstärke der Düse bestimmen.

Der Vorsprung kann ein vorspringender Teil sein. Der Vorsprung kann sich an der außenliegenden Oberfläche in radiale Richtung weg von der Mittelachse erstrecken. Der Vorsprung kann insbesondere einen Schirm oberhalb des Auslasses bilden. Der Vorsprung kann insbesondere spiegelsymmetrisch zu einer Ebene sein, die durch die Mitte des Auslasses verläuft.

Der Auslass ist in der ebenen Fläche angeordnet, wobei die ebene Fläche eine obere Seite aufweist. Der Auslass kann somit an dem der oberen Seite zugewandten Bereich angeordnet sein. Der der oberen Seite zugewandte Bereich kann die Begrenzung des Auslasses sein, die der oberen Seite am nächsten gelegen ist. Der der oberen Seite zugewandte Bereich kann sich von der innenliegenden Oberfläche zur außenliegenden Oberfläche erstrecken, wobei der Vorsprung an dem der oberen Seite zugewandten Bereich an der außenliegenden Oberfläche angeordnet sein kann.

Gemäß einer Ausführungsform kann die Düse an der außenliegenden Oberfläche mindestens ein Leitelement umfassen, wobei das mindestens eine Leitelemente an einem einer der gegenüberliegenden Seiten zugewandte Bereich des Auslasses angeordnet sein kann.

Auf diese Weise kann die Breite des Sprühstrahls auf einer Auslassseite kontrolliert werden. Folglich kann der Sprühstrahl mit der Düse besser an die zu reinigende Fläche angepasst werden. Hierdurch kann die Reinigungsleistung verbessert werden.

Das mindestens eine Leitelement kann ein vorspringender Teile sein. Das mindestens eine Leitelement kann sich an der außenliegenden Oberfläche in radiale Richtung weg von der Mittelachse erstrecken. Das mindestens eine Leitelement kann insbesondere eine seitliche Begrenzung des Auslasses bilden.

Der Auslass ist in der ebenen Fläche angeordnet, wobei die ebene Fläche zwei gegenüberliegende Seiten umfasst. Der einer der gegenüberliegenden Seiten zugewandte Bereich des Auslasses kann die Begrenzung des Auslasses sein, die einer der gegenüberliegenden Seiten am nächsten gelegen sein kann. Der einer der gegenüberliegenden Seiten zugewandte Bereich kann sich von der innenliegenden Oberfläche zur außenliegenden Oberfläche erstrecken, wobei das mindestens eine Leitelement an dem einer der gegenüberliegenden Seiten zugewandten Bereich an der außenliegenden Oberfläche angeordnet sein kann.

Das mindestens eine Leitelement kann mit dem Vorsprung verbunden sein. Beispielsweise kann der Auslass von dem mindestens einen Leitelement und dem Vorsprung, beispielsweise L-förmig, teilweise umrandet sein.

Das mindestens eine Leitelement kann zum Begrenzen des Fluidstrahls ausgebildet sein.

Gemäß einer Ausführungsform kann die Düse an der außenliegenden Oberfläche zwei Leitelemente umfassen, wobei das erste der zwei Leitelemente an dem der ersten gegenüberliegenden Seite zugewandten Bereich des Auslasses angeordnet sein kann, wobei das zweite der zwei Leitelemente an dem der zweiten gegenüberliegenden Seite zugewandten Bereich des Auslasses angeordnet sein kann.

Auf diese Weise kann der Sprühstrahl besonders gut geführt werden, sodass die Reinigungsleistung besonders gut sein kann. Insbesondere kann der Sprühstrahl in der Breite kontrolliert werden.

Die zwei Leitelemente können vorspringende Teile sein. Die zwei Leitelemente können sich an der außenliegenden Oberfläche in radiale Richtung weg von der Mittelachse erstrecken. Die zwei Leitelemente können insbesondere eine seitliche Begrenzung des Auslasses bilden. Die zwei Leitelemente können insbesondere spiegelsymmetrisch zu einer Ebene angeordnet sein, die durch die Mitte des Auslasses verläuft. Die zwei Leitelemente können insbesondere auf gegenüberliegenden Seiten des Auslasses angeordnet sein.

Der Auslass ist in der ebenen Fläche angeordnet, wobei die ebene Fläche zwei gegenüberliegende Seiten umfasst. Der der ersten gegenüberliegenden Seite zugewandte Bereich des Auslasses kann die Begrenzung des Auslasses sein, die der ersten gegenüberliegenden Seite am nächsten gelegen sein kann. Der der ersten gegenüberliegenden Seite zugewandte Bereich kann sich von der innenliegenden Oberfläche zur außenliegenden Oberfläche erstrecken, wobei das erste der zwei Leitelemente an dem der ersten gegenüberliegenden Seite zugewandten Bereich an der außenliegenden Oberfläche angeordnet sein kann.

Der der zweiten gegenüberliegenden Seite zugewandte Bereich des Auslasses kann die Begrenzung des Auslasses sein, die der zweiten gegenüberliegenden Seite am nächsten gelegen ist. Der der zweiten gegenüberliegenden Seite zugewandte Bereich kann sich von der innenliegenden Oberfläche zur außenliegenden Oberfläche erstrecken, wobei das zweite der zwei Leitelemente an dem der zweiten gegenüberliegenden Seite zugewandten Bereich an der außenliegenden Oberfläche angeordnet sein kann.

Die zwei Leitelemente können spiegelsymmetrisch zu einer Ebene angeordnet sein, wobei die Ebene insbesondere senkrecht zum Auslass ausgerichtet sein kann und den Mittelpunkt des Auslasses beinhalten kann.

Die zwei Leitelemente können mit dem Vorsprung verbunden sein. Beispielsweise kann der Auslass von den zwei Leitelementen und dem Vorsprung, beispielsweise U-förmig, teilweise umrandet sein.

Die zwei Leitelemente können zum Begrenzen des Fluidstrahls ausgebildet sein.

Die zwei Leitelemente können sich vom Auslass aus erstrecken. Der Abstand zwischen den zwei Leitelementen kann mit zunehmendem Abstand vom Auslass größer werden. Die zwei Leitelemente können einen Winkel von 20°-70°, bevorzugt von 30°-35° bilden.

Gemäß einer Ausführungsform kann der radiale Abstand der ebenen Fläche zur Mittelachse von einer, insbesondere der oberen Seite gegenüberliegenden, unteren Seite zur oberen Seite hin abnehmen.

Auf diese Weise kann der Druck in dem Fluid erhöht werden, sodass das Fluid mit einer höheren Geschwindigkeit aus der Düse austritt. Auf diese Weise kann die Reinigung effizienter, gründlicher und zuverlässiger erfolgen.

Der radiale Abstand zur Mittelachse kann der radiale Abstand zur Längsachse der Düse sein. Die Mittelachse kann zentral durch die Düse verlaufen. Die Mittelachse kann entlang der Flussrichtung des Fluids innerhalb der Düse verlaufen.

Die obere Seite kann in Flussrichtung des Fluids hinter der unteren Seite angeordnet sein. Beispielsweise könnte das Fluid erst an der unteren Seite und anschließend an der oberen Seite vorbeifließen. Die untere Seite kann der oberen Seite insbesondere entlang der zwei gegenüberliegenden Seiten gegenüber angeordnet sein.

Der radiale Abstand der ebenen Fläche kann zur Mittelachse von einer unteren Seite zur oberen Seite hin abnehmen kann bedeuten, dass die ebene Fläche zur Mittelachse hin verkippt sein kann, sodass die obere Seite der ebenen Fläche radial näher zu der Mittelachse angeordnet sein kann als die untere Seite der ebenen Fläche.

Gemäß einer Ausführungsform können die ebene Fläche und der Vorsprung einen Winkel kleiner 90° bilden.

Auf diese Weise kann ein besonders definiertes Sprühbild mit mindestens einem Sprühstrahl erzeugt werden, sodass hartnäckiger Schmutz besonders effizient, gründlich, zuverlässig und einfach entfernt werden kann.

Die ebene Fläche und der Vorsprung können einen Winkel kleiner 90° bilden. Der Winkel kann durch eine durch die ebene Fläche verlaufende Gerade und einen an der dem Auslass angeordneten Fläche des Vorsprungs gebildet werden. Die Fläche des Vorsprungs zur Bestimmung des Winkels kann die Fläche des Vorsprungs sein, die mit dem Fluid in Kontakt kommen kann.

Gemäß einer Ausführungsform kann der Durchmesser der Düse sich zumindest teilweise entlang der Mittelachse in die Richtung zur oberen Seite hin verjüngen.

Auf diese Weise kann der Druck auf das Fluid zum Auslass hin erhöht werden, sodass die Reinigungskraft erhöht werden kann. Hierdurch kann hartnäckiger Schmutz besonders effizient, gründlich, zuverlässig und einfach entfernt werden.

Der Durchmesser der Düse ist der Abstand zweier gegenüberliegender Seiten der innenliegenden Oberfläche der Düse. Der Durchmesser kann eine Gerade sein, die zwei Seiten der innenliegenden Oberfläche verbindet und durch die Mittelachse verläuft.

In die Richtung zur oberen Seite hin kann bedeuten, dass der Durchmesser sich in Flussrichtung des Fluids verjüngen kann. Verjüngen kann bedeuten verringern, reduzieren oder schmälern.

Gemäß einer Ausführungsform kann die Düse auf der innenliegenden Oberfläche eine dem Auslass gegenüberliegende Seite aufweisen, wobei der radiale Abstand der gegenüberliegenden Seite zur Mittelachse in Richtung der oberen Seite abnehmen kann, wobei insbesondere der radiale Abstand bereits entlang der Mittelachse in Richtung der unteren Seite zur oberen Seite hin gesehen vor dem Auslass abnehmen kann.

Auf diese Weise kann der Druck auf das Fluid erhöht werden, während gleichzeitig das Strömungsprofil an dem Auslass unverändert verbleiben kann. Auf diese Weise kann durch den höheren Druck Schmutz zuverlässig, einfach, gründlich und effizient entfernt werden. Wenn der radiale Abstand bereits entlang der Mittelachse in Richtung der unteren Seite zur oberen Seite hin gesehen vor dem Auslass abnehmen kann, kann ein erhöhter Druck auf das Fluids über die gesamte Höhe des Auslasses realisiert werden. Somit kann die Reinigung noch zuverlässiger, einfacher, gründlicher und effizienter sein.

Die auf der innenliegenden Oberfläche dem Auslass gegenüberliegende Seite kann mit einer gedachten Gerade durch die Mittelachse mit dem Auslass verbunden sein. Die auf der innenliegenden Oberfläche dem Auslass gegenüberliegende Seite kann die Rückseite der Düse sein.

Der radiale Abstand der gegenüberliegenden Seite zur Mittelachse kann in Richtung der oberen Seite abnehmen. Beispielsweise kann durch den abnehmenden radialen Abstand der Durchmesser der Düse reduziert werden. In Richtung der oberen Seite kann entlang der gegenüberliegenden Seiten zur oberen Seite hin sein. In Richtung der oberen Seite kann in die Flussrichtung des Fluids sein.

Der Auslass kann unterhalb der oberen Seite angeordnet sein. Beispielsweise kann der Auslass in Flussrichtung entlang der Mittelachse vor der oberen Seite angeordnet sein, wobei insbesondere der Auslass radial beabstandet zur Mittelachse angeordnet sein kann. Der radiale Abstand kann daher bereits entlang der Mittelachse in Richtung der unteren Seite zur oberen Seite hin gesehen vor dem Auslass abnehmen, sodass der Durchmesser der Düse bereits vor dem Auslass verringert werden kann.

Gemäß einer Ausführungsform kann der Auslass an einem Ende der Düse angeordnet sein.

Auf diese Weise kann das Strömungsprofil besonders an den Auslass angepasst sein, da kein Fluid an dem Auslass vorbeiströmen kann. Somit kann die Reinigung des Sensors besonders zuverlässig, gründlich, einfach und effizient sein.

Das Ende der Düse kann ein Abschluss der Düse sein. Das Ende der Düse kann das Ende der räumlichen Erstreckung der Düse sein. An einem Ende der Düse angeordnet kann bedeuten, dass der Auslass näher an dem Ende der Düse als am Anfang der Düse oder der Mitte der Düse angeordnet sein kann. Der Auslass kann beabstandet zum Ende der Düse angeordnet sein.

Die oben genannte Aufgabe wird gemäß einem zweiten Aspekt der Erfindung mit einer Vorrichtung umfassend einen Sensor, insbesondere eine Kamera, und eine erfindungsgemäße Düse gelöst, wobei die Düse zum Reinigen des Sensors ausgebildet ist.

Mit der Vorrichtung kann besonders einfach und zuverlässig Schmutz, insbesondere auf einem Sensor entfernt werden. Dabei kann mit der Vorrichtung auch hartnäckiger Schmutz problemlos gelöst werden, sodass eine einfache, zuverlässige und gründliche Entfernung von Schmutz gewährleistet werden kann. Vor allem ist die Vorrichtung besonders effizient aufgrund eines geringeren Fluidverbrauchs.

Die oben genannte Aufgabe wird gemäß einem dritten Aspekt der Erfindung durch ein Fahrzeug, insbesondere ein Kraftfahrzeug, mit einer erfindungsgemäßen Düse oder einer erfindungsgemäßen Vorrichtung gelöst.

Mit dem Fahrzeug kann besonders einfach und zuverlässig Schmutz, insbesondere auf einem Sensor entfernt werden. Dabei kann mit dem Fahrzeug auch hartnäckiger Schmutz problemlos gelöst werden, sodass eine einfache, zuverlässige und gründliche Entfernung von Schmutz gewährleistet werden kann. Vor allem ist das Fahrzeug besonders effizient aufgrund eines geringeren Fluidverbrauchs. Ferner kann die Unterstützung eines Fahrers, das teilautonome Fahren oder das autonome Fahren sichergestellt werden.

Die oben genannte Aufgabe wird gemäß einem vierten Aspekt der Erfindung durch die Verwendung einer erfindungsgemäßen Düse zum Reinigen eines Sensors gelöst.

Durch die Verwendung der erfindungsgemäßen Düse kann besonders einfach und zuverlässig Schmutz, insbesondere auf einem Sensor entfernt werden. Dabei kann durch die Verwendung der erfindungsgemäßen Düse auch hartnäckiger Schmutz problemlos gelöst werden, sodass eine einfache, zuverlässige und gründliche Entfernung von Schmutz gewährleistet werden kann. Vor allem ist die Verwendung der erfindungsgemäßen Düse besonders effizient aufgrund des geringeren Fluidverbrauchs.

Weitere Aufgaben, Merkmale, Vorteile und Aspekte der vorliegenden Erfindung werden für den Fachmann aus der folgenden Beschreibung und den beigefügten Ansprüchen ersichtlich. Es sollte jedoch verstanden werden, dass die folgende Beschreibung, die beigefügten Ansprüche und die spezifischen Beispiele, die bevorzugte Ausführungsformen der Anwendung zeigen, nur zur Veranschaulichung gegeben werden. Verschiedene Änderungen und Modifikationen im Rahmen des Geistes und des Umfangs der offengelegten Erfindung werden dem Fachmann beim Lesen der folgenden Ausführungen ohne weiteres einleuchten.

### DEFINITIONEN

Die folgenden Ausdrücke haben im Allgemeinen vorzugsweise die nachstehend aufgeführten Bedeutungen, sofern sich aus dem Kontext, in dem sie verwendet werden, nichts anderes ergibt.

Der hier verwendete Ausdruck "umfassen" schließt neben seiner wörtlichen Bedeutung auch die Ausdrücke "im Wesentlichen bestehen aus" und "bestehen aus" ein und bezieht sich speziell auf diese. Somit bezieht sich der Ausdruck "umfassen" sowohl auf Ausführungsformen, bei denen der Gegenstand, der speziell aufgeführte Elemente "umfasst", keine weiteren Elemente umfasst, als auch auf Ausführungsformen, bei denen der Gegenstand, der speziell aufgeführte Elemente "umfasst", weitere Elemente umfassen kann und/oder tatsächlich umfasst. Ebenso ist der Ausdruck "haben" als der Ausdruck "umfassen" zu verstehen, der auch die Ausdrücke "im Wesentlichen bestehen aus" und "bestehen aus" einschließt und sich auf diese bezieht. Der Ausdruck "bestehen im Wesentlichen aus" bezieht sich, soweit möglich, insbesondere auf Ausführungsformen, bei denen der Gegenstand neben den spezifisch aufgeführten Elementen, aus denen der Gegenstand im Wesentlichen besteht, 20 % oder weniger, insbesondere 15 % oder weniger, 10 % oder weniger oder insbesondere 5 % oder weniger weitere Elemente umfasst.

### FIGUREN

- Fig. 1: schematische Ansicht einer Düse;
- Fig. 2: Querschnitt einer Düse;
- Fig. 3: Querschnitt einer Düse;
- Fig. 4: schematische Ansicht einer Düse;
- Fig. 5: Querschnitt einer Düse;
- Fig. 6: schematische Ansicht einer Düse;
- Fig. 7: Querschnitt einer Düse;
- Fig. 8: schematische Ansicht einer Düse;
- Fig. 9: Querschnitt einer Düse.

### SPEZIELLE BESCHREIBUNG

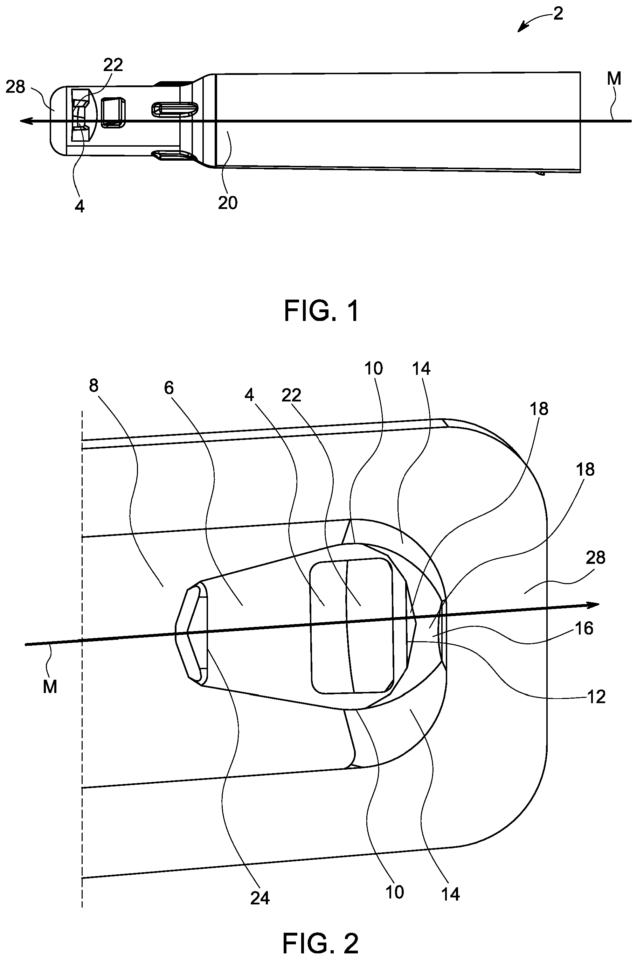

Fig. 1 zeigt eine schematische Ansicht einer Düse 2.

Die Düse 2 zur automatischen Reinigung eines Sensors, insbesondere eines Sensors eines Kraftfahrzeugs, umfasst einen Auslass 4 zur Abgabe des Fluids. Die Düse 2 umfasst eine ebene Fläche 6, wobei die ebene Fläche 6 auf der innenliegenden Oberfläche 8 der Düse 2 angeordnet ist. Der Auslass 4 ist in der ebenen Fläche 6 angeordnet. Die ebene Fläche 6 umfasst zwei gegenüberliegende Seiten 10. Die ebene Fläche 6 umfasst eine obere Seite 12, wobei die obere Seite 12 zwischen den zwei gegenüberliegenden Seiten 10 angeordnet ist. Die Düse 2 umfasst auf der innenliegenden Oberfläche 8 zwei gebogene Flächen 14. Jeweils eine der gebogenen Flächen 14 ist an jeweils einer der zwei gegenüberliegenden Seiten 10 der ebenen Fläche 6 angeordnet, wobei die gebogenen Flächen 14 in die Richtung der oberen Seite 12 aufeinander zulaufend ausgebildet sind.

Fig. 2 zeigt einen Querschnitt der in Fig. 1 gezeigten Düse 2.

Die Düse 2 zur automatischen Reinigung eines Sensors, insbesondere eines Sensors eines Kraftfahrzeugs, umfasst einen Auslass 4 zur Abgabe des Fluids. Die Düse 2 umfasst eine ebene Fläche 6, wobei die ebene Fläche 6 auf der innenliegenden Oberfläche 8 der Düse 2 angeordnet ist. Der Auslass 4 ist in der ebenen Fläche 6 angeordnet. Die ebene Fläche 6 umfasst zwei gegenüberliegende Seiten 10. Die ebene Fläche 6 umfasst eine obere Seite 12, wobei die obere Seite 12 zwischen den zwei gegenüberliegenden Seiten 10 angeordnet ist. Die Düse 2 umfasst auf der innenliegenden Oberfläche 8 zwei gebogene Flächen 14. Jeweils eine der gebogenen Flächen 14 ist an jeweils einer der zwei gegenüberliegenden Seiten 10 der ebenen Fläche 6 angeordnet, wobei die gebogenen Flächen 14 in die Richtung der oberen Seite 12 aufeinander zulaufend ausgebildet sind.

Der Auslass 4 und die ebene Fläche 6 der Düse 2 ist radial beabstandet zur Mittelachse M angeordnet.

Die zwei gebogenen Flächen 14 sind über eine Mittelebene 16 verbunden, wobei die Mittelebene 16 an der oberen Seite 12 angeordnet ist. Die Mittelebene 16 besteht aus mindestens zwei Teilebenen 18. Die gebogenen Flächen 14 beginnen an der ebenen Fläche 6 in dem Bereich, in dem der Auslass 4 in der ebenen Fläche 6 angeordnet ist.

Der Auslass 4 ist rechteckig. Alternativ kann der Auslass 4 oval oder halbmondförmig sein.

Jeweils ein Punkt jeder der beiden gebogenen Flächen 14 ist maximal 0,5 mm, bevorzugt maximal 0,1 mm und besonders bevorzugt maximal 0,05 mm von dem Auslass 4 beabstandet.

Die Düse 2 erstreckt sich entlang einer Mittelachse M, wobei die beiden gebogenen Flächen 14 spiegelsymmetrisch zu einer Spiegelebene angeordnet sind. Die Spiegelebene enthält die Mittelachse M und die Spiegelebene verläuft durch den Mittelpunkt des Auslasses 4.

Die Düse 2 umfasst an der außenliegenden Oberfläche 20 einen Vorsprung 22, wobei der Vorsprung 22 an dem der oberen Seite 12 zugewandten Bereich des Auslasses 4 angeordnet ist.

Die Düse 2 ist zur Bildung von mindestens drei Fluidstrahlen ausgebildet.

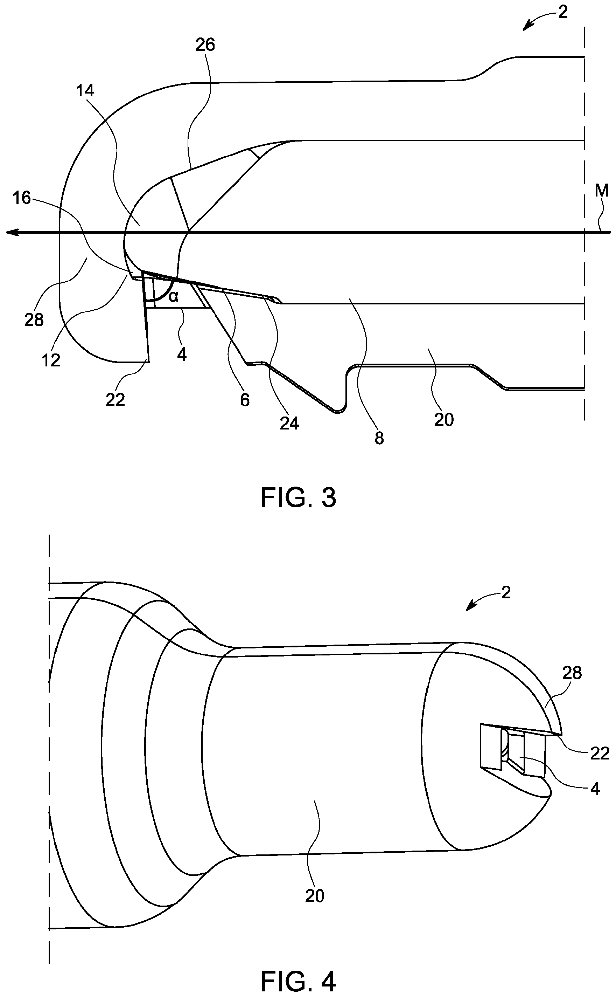

Fig. 3 zeigt einen Querschnitt der in Fig. 1 gezeigten Düse 2.

Die Düse 2 zur automatischen Reinigung eines Sensors, insbesondere eines Sensors eines Kraftfahrzeugs, umfasst einen Auslass 4 zur Abgabe des Fluids. Die Düse 2 umfasst eine ebene Fläche 6, wobei die ebene Fläche 6 auf der innenliegenden Oberfläche 8 der Düse 2 angeordnet ist. Der Auslass 4 ist in der ebenen Fläche 6 angeordnet. Die ebene Fläche 6 umfasst zwei gegenüberliegende Seiten 10. Die ebene Fläche 6 umfasst eine obere Seite 12, wobei die obere Seite 12 zwischen den zwei gegenüberliegenden Seiten 10 angeordnet ist. Die Düse 2 umfasst auf der innenliegenden Oberfläche 8 zwei gebogene Flächen 14. Jeweils eine der gebogenen Flächen 14 ist an jeweils einer der zwei gegenüberliegenden Seiten 10 der ebenen Fläche 6 angeordnet, wobei die gebogenen Flächen 14 in die Richtung der oberen Seite 12 aufeinander zulaufend ausgebildet sind.

Die in Fig. 3 gezeigte Ausführungsform der Düse 2 entspricht der Ausführungsform der Düse 2 in den Fig. 1 und 2. Daher wird nur auf die neu gezeigten Merkmale eingegangen.

Die Düse 2 umfasst an der außenliegenden Oberfläche 20 einen Vorsprung 22, wobei der Vorsprung 22 an dem der oberen Seite 12 zugewandten Bereich des Auslasses 4 angeordnet ist.

Der radiale Abstand der ebenen Fläche 6 zur Mittelachse M nimmt von einer der oberen Seite 12 gegenüberliegenden unteren Seite 24 zur oberen Seite 12 hin ab.

Die ebene Fläche 6 und der Vorsprung 22 bilden einen Winkel α kleiner 90°.

Der Durchmesser der Düse 2 verjüngt sich zumindest teilweise entlang der Mittelachse M in die Richtung zur oberen Seite 12 hin.

Die Düse 2 weist auf der innenliegenden Oberfläche 8 eine dem Auslass 4 gegenüberliegende Seite 26 auf, wobei der radiale Abstand der gegenüberliegenden Seite 26 zur Mittelachse M in Richtung der oberen Seite 12 abnimmt. Der radiale Abstand nimmt bereits entlang der Mittelachse M in Richtung der unteren Seite 24 zur oberen Seite 12 hin gesehen vor dem Auslass 4 ab.

Der Auslass 4 ist an einem Ende 28 der Düse 2 angeordnet.

Fig. 4 zeigt eine schematische Ansicht einer Düse 2, bei der die Mittelachse M durch die ebene Fläche 6 und den Auslass 4 verläuft, wobei die ebene Fläche 6 und der Auslass 4 senkrecht zur Mittelachse M stehen.

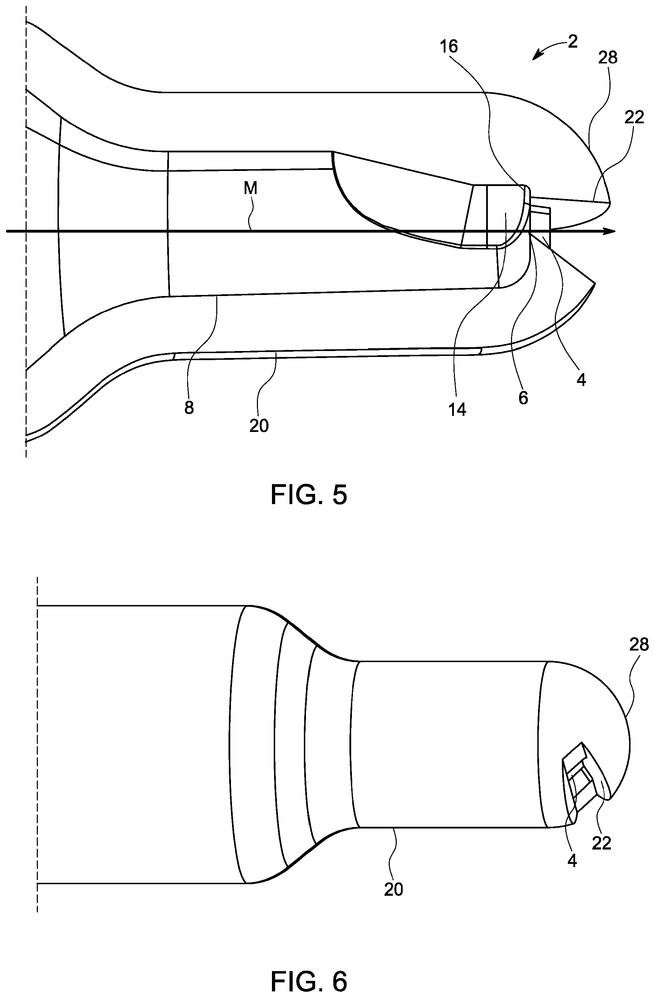

Fig. 5 zeigt einen Querschnitt der in Fig. 4 gezeigten Düse 2.

Die Düse 2 zur automatischen Reinigung eines Sensors, insbesondere eines Sensors eines Kraftfahrzeugs, umfasst einen Auslass 4 zur Abgabe des Fluids. Die Düse 2 umfasst eine ebene Fläche 6, wobei die ebene Fläche 6 auf der innenliegenden Oberfläche 8 der Düse 2 angeordnet ist. Der Auslass 4 ist in der ebenen Fläche 6 angeordnet. Die ebene Fläche 6 umfasst zwei gegenüberliegende Seiten 10. Die ebene Fläche 6 umfasst eine obere Seite 12, wobei die obere Seite 12 zwischen den zwei gegenüberliegenden Seiten 10 angeordnet ist. Die Düse 2 umfasst auf der innenliegenden Oberfläche 8 zwei gebogene Flächen 14. Jeweils eine der gebogenen Flächen 14 ist an jeweils einer der zwei gegenüberliegenden Seiten 10 der ebenen Fläche 6 angeordnet, wobei die gebogenen Flächen 14 in die Richtung der oberen Seite 12 aufeinander zulaufend ausgebildet sind.

Die zwei gebogenen Flächen 14 sind über eine Mittelebene 16 verbunden, wobei die Mittelebene 16 an der oberen Seite 12 angeordnet ist. Die Mittelebene 16 besteht aus mindestens zwei Teilebenen 18. Die gebogenen Flächen 14 beginnen an der ebenen Fläche 6 in dem Bereich, in dem der Auslass 4 in der ebenen Fläche 6 angeordnet ist.

Der Auslass 4 ist rechteckig. Jeweils ein Punkt jeder der beiden gebogenen Flächen 14 ist maximal 0,5 mm, bevorzugt maximal 0,1 mm und besonders bevorzugt maximal 0,05 mm von dem Auslass 4 beabstandet.

Die Düse 2 erstreckt sich entlang einer Mittelachse M, wobei die beiden gebogenen Flächen 14 spiegelsymmetrisch zu einer Spiegelebene angeordnet sind. Die Spiegelebene enthält die Mittelachse M und die Spiegelebene verläuft durch den Mittelpunkt des Auslasses 4.

Die Düse 2 umfasst an der außenliegenden Oberfläche 20 einen Vorsprung 22, wobei der Vorsprung 22 an dem der oberen Seite 12 zugewandten Bereich des Auslasses 4 angeordnet ist.

Fig. 6 zeigt eine schematische Ansicht einer Düse 2. Der Auslass 4 und die ebene Fläche 6 sind beabstandet zur Mittelachse M angeordnet, wobei die ebene Fläche 6 mit der Mittelachse M einen Winkel größer 0° und kleiner 90° bildet.

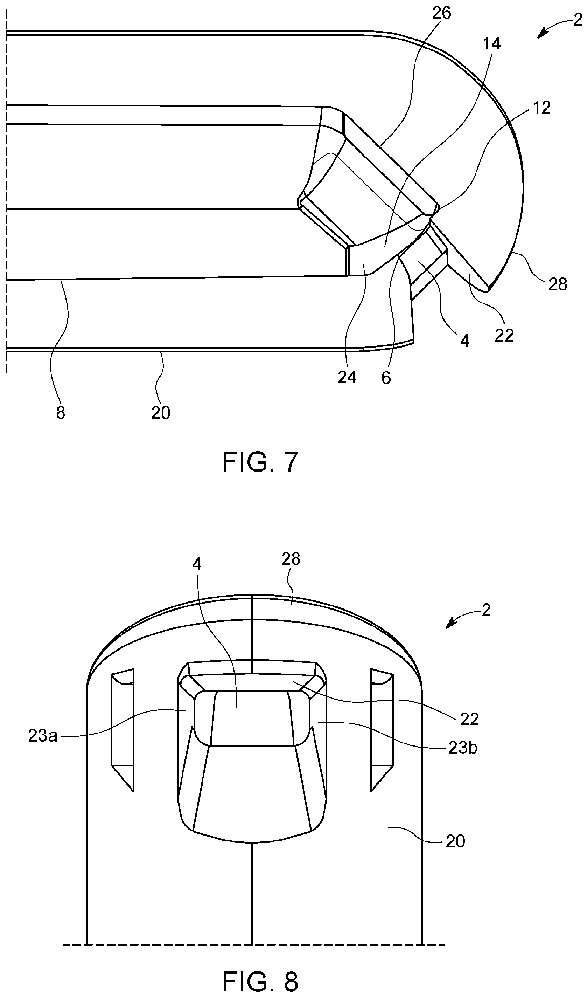

Fig. 7 zeigt einen Querschnitt der in Fig. 6 gezeigten Düse 2.

Die Düse 2 zur automatischen Reinigung eines Sensors, insbesondere eines Sensors eines Kraftfahrzeugs, umfasst einen Auslass 4 zur Abgabe des Fluids. Die Düse 2 umfasst eine ebene Fläche 6, wobei die ebene Fläche 6 auf der innenliegenden Oberfläche 8 der Düse 2 angeordnet ist. Der Auslass 4 ist in der ebenen Fläche 6 angeordnet. Die ebene Fläche 6 umfasst zwei gegenüberliegende Seiten 10. Die ebene Fläche 6 umfasst eine obere Seite 12, wobei die obere Seite 12 zwischen den zwei gegenüberliegenden Seiten 10 angeordnet ist. Die Düse 2 umfasst auf der innenliegenden Oberfläche 8 zwei gebogene Flächen 14. Jeweils eine der gebogenen Flächen 14 ist an jeweils einer der zwei gegenüberliegenden Seiten 10 der ebenen Fläche 6 angeordnet, wobei die gebogenen Flächen 14 in die Richtung der oberen Seite 12 aufeinander zulaufend ausgebildet sind.

Die zwei gebogenen Flächen 14 sind über eine Mittelebene 16 verbunden, wobei die Mittelebene 16 an der oberen Seite 12 angeordnet ist. Die Mittelebene 16 besteht aus mindestens zwei Teilebenen 18. Die gebogenen Flächen 14 beginnen an der ebenen Fläche 6 in dem Bereich, in dem der Auslass 4 in der ebenen Fläche 6 angeordnet ist.

Der Auslass 4 ist rechteckig. Jeweils ein Punkt jeder der beiden gebogenen Flächen 14 ist maximal 0,5 mm, bevorzugt maximal 0,1 mm und besonders bevorzugt maximal 0,05 mm von dem Auslass 4 beabstandet.

Die Düse 2 erstreckt sich entlang einer Mittelachse M, wobei die beiden gebogenen Flächen 14 spiegelsymmetrisch zu einer Spiegelebene angeordnet sind. Die Spiegelebene enthält die Mittelachse M und die Spiegelebene verläuft durch den Mittelpunkt des Auslasses 4.

Die Düse 2 umfasst an der außenliegenden Oberfläche 20 einen Vorsprung 22, wobei der Vorsprung 22 an dem der oberen Seite 12 zugewandten Bereich des Auslasses 4 angeordnet ist.

Fig. 8 zeigt eine schematische Ansicht einer Düse 2.

Die Düse 2 zur automatischen Reinigung eines Sensors, insbesondere eines Sensors eines Kraftfahrzeugs, umfasst einen Auslass 4 zur Abgabe des Fluids. Die Düse 2 umfasst eine ebene Fläche 6, wobei die ebene Fläche 6 auf der innenliegenden Oberfläche 8 der Düse 2 angeordnet ist. Der Auslass 4 ist in der ebenen Fläche 6 angeordnet. Die ebene Fläche 6 umfasst zwei gegenüberliegende Seiten 10. Die ebene Fläche 6 umfasst eine obere Seite 12, wobei die obere Seite 12 zwischen den zwei gegenüberliegenden Seiten 10 angeordnet ist. Die Düse 2 umfasst auf der innenliegenden Oberfläche 8 zwei gebogene Flächen 14. Jeweils eine der gebogenen Flächen 14 ist an jeweils einer der zwei gegenüberliegenden Seiten 10 der ebenen Fläche 6 angeordnet, wobei die gebogenen Flächen 14 in die Richtung der oberen Seite 12 aufeinander zulaufend ausgebildet sind.

Die Düse 2 umfasst an der außenliegenden Oberfläche 20 einen Vorsprung 22, wobei der Vorsprung 22 an dem der oberen Seite 12 zugewandten Bereich des Auslasses 4 angeordnet ist.

Die Düse 2 umfasst an der außenliegenden Oberfläche 20 zwei Leitelemente 23a, 23b, wobei das erste der zwei Leitelemente 23a an dem der ersten gegenüberliegenden Seite 10 zugewandten Bereich des Auslasses 4 angeordnet ist. Das zweite der zwei Leitelemente 23b ist an dem der zweiten gegenüberliegenden Seite 10 zugewandten Bereich des Auslasses 4 angeordnet.

Die zwei Leitelemente 23a, 23b sind spiegelsymmetrisch zu einer Ebene angeordnet, wobei die Ebene senkrecht zum Auslass 4 ausgerichtet ist und den Mittelpunkt des Auslasses 4 beinhaltet.

Die zwei Leitelemente 23a, 23b sind mit dem Vorsprung 22 verbunden. Die zwei Leitelemente 23a, 23b sind zum Begrenzen des Fluidstrahls ausgebildet.

Die Düse 2 ist zur Bildung von mindestens drei Fluidstrahlen ausgebildet.

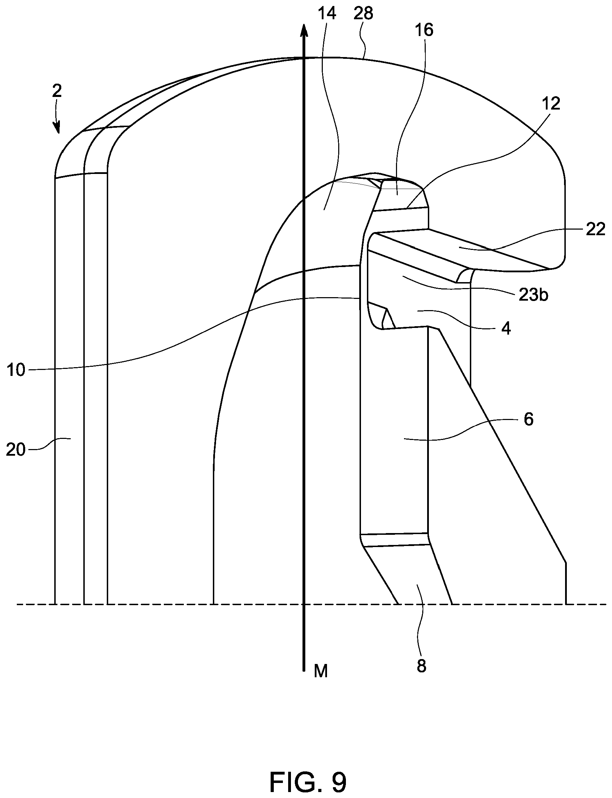

Fig. 9 zeigt einen Querschnitt der in Fig. 8 gezeigten Düse 2.

Die Düse 2 zur automatischen Reinigung eines Sensors, insbesondere eines Sensors eines Kraftfahrzeugs, umfasst einen Auslass 4 zur Abgabe des Fluids. Die Düse 2 umfasst eine ebene Fläche 6, wobei die ebene Fläche 6 auf der innenliegenden Oberfläche 8 der Düse 2 angeordnet ist. Der Auslass 4 ist in der ebenen Fläche 6 angeordnet. Die ebene Fläche 6 umfasst zwei gegenüberliegende Seiten 10. Die ebene Fläche 6 umfasst eine obere Seite 12, wobei die obere Seite 12 zwischen den zwei gegenüberliegenden Seiten 10 angeordnet ist. Die Düse 2 umfasst auf der innenliegenden Oberfläche 8 zwei gebogene Flächen 14. Jeweils eine der gebogenen Flächen 14 ist an jeweils einer der zwei gegenüberliegenden Seiten 10 der ebenen Fläche 6 angeordnet, wobei die gebogenen Flächen 14 in die Richtung der oberen Seite 12 aufeinander zulaufend ausgebildet sind.

Der Auslass 4 und die ebene Fläche 6 der Düse 2 ist radial beabstandet zur Mittelachse M angeordnet.

Die zwei gebogenen Flächen 14 sind über eine Mittelebene 16 verbunden, wobei die Mittelebene 16 an der oberen Seite 12 angeordnet ist. Die gebogenen Flächen 14 beginnen an der ebenen Fläche 6 in dem Bereich, in dem der Auslass 4 in der ebenen Fläche 6 angeordnet ist.

Der Auslass 4 ist rechteckig. Alternativ kann der Auslass 4 oval oder halbmondförmig sein.

Die Düse 2 umfasst an der außenliegenden Oberfläche 20 einen Vorsprung 22, wobei der Vorsprung 22 an dem der oberen Seite 12 zugewandten Bereich des Auslasses 4 angeordnet ist.

Die Düse 2 umfasst an der außenliegenden Oberfläche 20 zwei Leitelemente 23a, 23b, wobei das erste der zwei Leitelemente 23a an dem der ersten gegenüberliegenden Seite 10 zugewandten Bereich des Auslasses 4 angeordnet ist. Das zweite der zwei Leitelemente 23b ist an dem der zweiten gegenüberliegenden Seite 10 zugewandten Bereich des Auslasses 4 angeordnet.

Die zwei Leitelemente 23a, 23b sind spiegelsymmetrisch zu einer Ebene angeordnet, wobei die Ebene senkrecht zum Auslass 4 ausgerichtet ist und den Mittelpunkt des Auslasses 4 beinhaltet.

Die zwei Leitelemente 23a, 23b sind mit dem Vorsprung 22 verbunden. Die zwei Leitelemente 23a, 23b sind zum Begrenzen des Fluidstrahls ausgebildet.

## Patentansprüche

1. Düse (2) zur automatischen Reinigung eines Sensors, insbesondere eines Sensors eines Kraftfahrzeugs,
wobei die Düse (2) einen Auslass (4) zur Abgabe des Fluids umfasst,
wobei die Düse (2) eine ebene Fläche (6) umfasst, **dadurch gekennzeichnet, dass**
die ebene Fläche (6) auf der innenliegenden Oberfläche (8) der Düse (2) angeordnet ist,
wobei der Auslass (4) in der ebenen Fläche (6) angeordnet ist,
wobei die ebene Fläche (6) zwei gegenüberliegende Seiten (10) umfasst,
wobei die ebene Fläche (6) eine obere Seite (12) umfasst,
wobei die obere Seite (12) zwischen den zwei gegenüberliegenden Seiten (10) angeordnet ist,
wobei die Düse (2) auf der innenliegenden Oberfläche (8) zwei gebogene Flächen (14) umfasst,
wobei jeweils eine der gebogenen Flächen (14) an jeweils einer der zwei gegenüberliegenden Seiten (10) der ebenen Fläche (6) angeordnet ist,
wobei die gebogenen Flächen (14) in die Richtung der oberen Seite (12) aufeinander zulaufend ausgebildet sind.

2. Düse nach Anspruch 1,
**dadurch gekennzeichnet, dass**
die zwei gebogenen Flächen (14) über eine Mittelebene (16) verbunden sind, wobei die Mittelebene (16) an der oberen Seite (12) angeordnet ist.

3. Düse nach Anspruch 2,
**dadurch gekennzeichnet, dass**
die Mittelebene (16) aus mindestens zwei Teilebenen (18) besteht.

4. Düse nach einem der Ansprüche 1 bis 3,
**dadurch gekennzeichnet, dass**
die gebogenen Flächen (14) an der ebenen Fläche (6) in dem Bereich beginnen, in dem der Auslass (4) in der ebenen Fläche (6) angeordnet ist.

5. Düse nach einem der Ansprüche 1 bis 4,
**dadurch gekennzeichnet, dass**
der Auslass (4) rechteckig, oval oder halbmondförmig ist.

6. Düse nach einem der Ansprüche 1 bis 5,
**dadurch gekennzeichnet, dass**
jeweils ein Punkt jeder der beiden gebogenen Flächen (14) maximal 0,5 mm, bevorzugt maximal 0,1 mm und besonders bevorzugt maximal 0,05 mm von dem Auslass (4) beabstandet ist.

7. Düse nach einem der Ansprüche 1 bis 6,
**dadurch gekennzeichnet, dass**
sich die Düse (2) entlang einer Mittelachse (M) erstreckt,
wobei die beiden gebogenen Flächen (14) spiegelsymmetrisch zu einer Spiegelebene angeordnet sind,
wobei die Spiegelebene die Mittelachse (M) enthält und die Spiegelebene durch den Auslass (4), insbesondere durch den Mittelpunkt des Auslasses (4), verläuft.

8. Düse nach einem der Ansprüche 1 bis 7,
**dadurch gekennzeichnet, dass**
die Düse (2) an der außenliegenden Oberfläche (20) einen Vorsprung (22) umfasst,
wobei der Vorsprung (22) an dem der oberen Seite (12) zugewandten Bereich des Auslasses (4) angeordnet ist.

9. Düse nach einem der Ansprüche 1 bis 8,
**dadurch gekennzeichnet, dass**
der radiale Abstand der ebenen Fläche (6) zur Mittelachse (M) von einer, insbesondere der oberen Seite (12) gegenüberliegenden, unteren Seite (24) zur oberen Seite (12) hin abnimmt.

10. Düse nach Anspruch 8 und 9,
**dadurch gekennzeichnet, dass**
die ebene Fläche (6) und der Vorsprung (22) einen Winkel (α) kleiner 90° bilden.

11. Düse nach einem der Ansprüche 1 bis 10,
**dadurch gekennzeichnet, dass**
der Durchmesser der Düse (2) sich zumindest teilweise entlang der Mittelachse (M) in die Richtung zur oberen Seite (12) hin verjüngt.

12. Düse nach einem der Ansprüche 1 bis 11,
**dadurch gekennzeichnet, dass**
die Düse (2) auf der innenliegenden Oberfläche (8) eine dem Auslass (4) gegenüberliegende Seite (26) aufweist,
wobei der radiale Abstand der gegenüberliegenden Seite (26) zur Mittelachse (M) in Richtung der oberen Seite (12) abnimmt,
wobei insbesondere der radiale Abstand bereits entlang der Mittelachse (M) in Richtung der unteren Seite (24) zur oberen Seite (12) hin gesehen vor dem Auslass (4) abnimmt.

13. Düse nach einem der Ansprüche 1 bis 12,
**dadurch gekennzeichnet, dass**
der Auslass (4) an einem Ende (28) der Düse (2) angeordnet ist.

14. Vorrichtung umfassend einen Sensor, insbesondere eine Kamera, und eine Düse (2) nach einem der Ansprüche 1 bis 13,
wobei die Düse (2) zum Reinigen des Sensors ausgebildet ist.

15. Fahrzeug, insbesondere ein Kraftfahrzeug, mit einer Düse (2) nach einem der Ansprüche 1 bis 13 oder einer Vorrichtung nach Anspruch 14.

## Claims

1. Nozzle (2) for automatically cleaning a sensor, in particular a sensor of a motor vehicle,
wherein the nozzle (2) comprises an outlet (4) for discharging the fluid,
wherein the nozzle (2) comprises a planar face (6),
**characterised in that** the planar face (6) is arranged on the inner surface (8) of the nozzle (2),
wherein the outlet (4) is arranged in the planar face (6),
wherein the planar face (6) comprises two opposite sides (10),
wherein the planar face (6) comprises an upper side (12),
wherein the upper side (12) is arranged between the two opposite sides (10),
wherein the nozzle (2) comprises two curved faces (14) on the inner surface (8),
wherein each of the curved faces (14) is arranged on a respective one of the two opposite sides (10) of the planar face (6),
wherein the curved faces (14) are designed in such a way that they converge in the direction of the upper side (12).

2. Nozzle according to claim 1,
**characterised in that**
the two curved faces (14) are connected via a central plane (16),
wherein the central plane (16) is arranged on the upper side (12).

3. Nozzle according to claim 2,
**characterised in that**
the central plane (16) consists of at least two partial planes (18).

4. Nozzle according to any of claims 1 to 3,
**characterised in that**
the curved faces (14) begin at the planar face (6) in the region in which the outlet (4) is arranged in the planar face (6).

5. Nozzle according to any of claims 1 to 4,
**characterised in that**
the outlet (4) is rectangular, oval or crescent-shaped.

6. Nozzle according to any of claims 1 to 5,
**characterised in that**
in each case one point of each of the two curved faces (14) is at a maximum distance of 0.5 mm, preferably at a maximum distance of 0.1 mm and particularly preferably at a maximum distance of 0.05 mm from the outlet (4).

7. Nozzle according to any of claims 1 to 6,
**characterised in that**
the nozzle (2) extends along a central axis (M),
wherein the two curved faces (14) are arranged mirror-symmetrically to a mirror plane,
wherein the mirror plane contains the central axis (M) and the mirror plane runs through the outlet (4), in particular through the centre of the outlet (4).

8. Nozzle according to any of claims 1 to 7,
**characterised in that**
the nozzle (2) comprises a projection (22) on the outer surface (20),
wherein the projection (22) is arranged on the region of the outlet (4) facing the upper side (12).

9. Nozzle according to any of claims 1 to 8,
**characterised in that**
the radial distance of the planar face (6) from the central axis (M) decreases from a lower side (24), in particular opposite the upper side (12), towards the upper side (12).

10. Nozzle according to claims 8 and 9,
**characterised in that**
the planar face (6) and the projection (22) form an angle (α) less than 90°.

11. Nozzle according to any of claims 1 to 10,
**characterised in that**
the diameter of the nozzle (2) tapers at least partially along the central axis (M) in the direction towards the upper side (12).

12. Nozzle according to any of claims 1 to 11,
**characterised in that**
the nozzle (2) has a side (26) opposite the outlet (4) on the inner surface (8),
wherein the radial distance of the opposite side (26) from the central axis (M) decreases in the direction of the upper side (12),
wherein in particular the radial distance already decreases along the central axis (M) in the direction of the lower side (24) towards the upper side (12) in front of the outlet (4).

13. Nozzle according to any of claims 1 to 12,
**characterised in that**
the outlet (4) is arranged at one end (28) of the nozzle (2).

14. Device comprising a sensor, in particular a camera, and a nozzle (2) according to any of claims 1 to 13,
wherein the nozzle (2) is designed to clean the sensor.

15. Vehicle, in particular a motor vehicle, with a nozzle (2) according to any of claims 1 to 13, or a device according to claim 14.

## Revendications

1. Buse (2) pour le nettoyage automatique d'un capteur, en particulier d'un capteur d'un véhicule à moteur,
la buse (2) comprenant une sortie (4) destinée à délivrer le fluide, la buse (2) comprenant une surface plane (6), **caractérisée en ce que** la surface plane (6) est disposée sur la surface intérieure (8) de la buse (2), la sortie (4) étant disposée dans la surface plane (6), la surface plane (6) comprenant deux côtés opposés (10), la surface plane (6) comprenant un côté supérieur (12), le côté supérieur (12) étant disposé entre les deux côtés opposés (10), la buse (2) comprenant deux surfaces incurvées (14) sur la surface intérieure (8), chacune des surfaces incurvées (14) étant disposée sur l'un respectif des deux côtés opposés (10) de la surface plane (6), les surfaces incurvées (14) étant réalisées de manière à converger l'une vers l'autre en direction du côté supérieur (12).

2. Buse selon la revendication 1,
**caractérisée en ce que** les deux surfaces incurvées (14) sont reliées par un plan médian (16), le plan médian (16) étant disposé sur le côté supérieur (12).

3. Buse selon la revendication 2,
**caractérisée en ce que** le plan médian (16) est constitué d'au moins deux plans partiels (18).

4. Buse selon l'une quelconque des revendications 1 à 3,
**caractérisée en ce que** les surfaces incurvées (14) commencent sur la surface plane (6) dans la zone dans laquelle la sortie (4) est disposée dans la surface plane (6).

5. Buse selon l'une quelconque des revendications 1 à 4,
**caractérisée en ce que** la sortie (4) est rectangulaire, ovale ou en forme de demi-lune.

6. Buse selon l'une quelconque des revendications 1 à 5,
**caractérisée en ce qu'**un point de chacune des deux surfaces incurvées (14) est distant de la sortie (4) de 0,5 mm au maximum, de préférence de 0,1 mm au maximum et de manière particulièrement préférée de 0,05 mm au maximum.

7. Buse selon l'une quelconque des revendications 1 à 6,
**caractérisée en ce que** la buse (2) s'étend le long d'un axe central (M),
les deux surfaces incurvées (14) étant disposées de manière symétrique par rapport à un plan de symétrie,
le plan de symétrie contenant l'axe central (M) et passant par la sortie (4), en particulier par le centre de la sortie (4).

8. Buse selon l'une quelconque des revendications 1 à 7,
**caractérisée en ce que** la buse (2) comprend une saillie (22) sur la surface extérieure (20), la saillie (22) étant disposée dans la zone de la sortie (4) tournée vers le côté supérieur (12).

9. Buse selon l'une quelconque des revendications 1 à 8,
**caractérisée en ce que** la distance radiale de la surface plane (6) par rapport à l'axe central (M) diminue depuis un côté inférieur (24), en particulier opposé au côté supérieur (12), en direction du côté supérieur (12).

10. Buse selon les revendications 8 et 9, **caractérisée en ce que** la surface plane (6) et la saillie (22) forment un angle (α) inférieur à 90°.

11. Buse selon l'une quelconque des revendications 1 à 10,
**caractérisée en ce que** le diamètre de la buse (2) se rétrécit au moins partiellement le long de l'axe central (M) en direction du côté supérieur (12).

12. Buse selon l'une quelconque des revendications 1 à 11,
**caractérisée en ce que** la buse (2) présente un côté (26) opposé à la sortie (4) sur la surface intérieure (8),
la distance radiale du côté opposé (26) par rapport à l'axe central (M) diminuant en direction du côté supérieur (12),
en particulier la distance radiale diminuant déjà, le long de l'axe central (M) depuis le côté inférieur (24) vers le côté supérieur (12), avant la sortie (4).

13. Buse selon l'une quelconque des revendications 1 à 12, **caractérisée en ce que** la sortie (4) est disposée à une extrémité (28) de la buse (2).

14. Dispositif comprenant un capteur, en particulier une caméra, et une buse (2) selon l'une quelconque des revendications 1 à 13, la buse (2) étant conçue pour le nettoyage du capteur.

15. Véhicule, en particulier un véhicule à moteur, avec une buse (2) selon l'une quelconque des revendications 1 à 13 ou un dispositif selon la revendication 14.
